# FASCICULE DE BREVET EUROPEEN

(11) **EP 3 166 823 B1**
(45) Date de publication et mention de la délivrance du brevet: **16.09.2020**
(21) Numéro de dépôt: 15724300.7
(22) Date de dépôt: 22.05.2015
(51) Int. Cl.: B60S 1/38, B60S 1/52

(54) **CONNECTEUR MÉCANIQUE POUR UN BALAI D'ESSUIE-GLACE DE VÉHICULE**
MECHANISCHER VERBINDER FÜR EIN FAHRZEUGWINDSCHUTZSCHEIBENWISCHERBLATT
MECHANICAL CONNECTOR FOR A VEHICLE WINDSHIELD WIPER BLADE

(30) Priorité: 11.07.2014 FR 1456746
(43) Date de publication de la demande: 17.05.2017
(73) Titulaire: Valeo Systèmes d'Essuyage, 78322 Le Mesnil Saint Denis (FR)
(72) Inventeur: CAILLOT, Gérald, F-78720 Cernay La Ville (FR); IZABEL, Vincent, F-91380 Chilly Mazarin (FR); JARASSON, Jean-Michel, F-78321 Le Mesnil Saint Denis (FR)
(74) Mandataire: Valeo Vision
(86) Numéro de dépôt international: PCT/EP2015/061397
(87) Numéro de publication internationale: WO 2016/005095

(56) Documents cités:
- EP-A1- 2 671 766
- DE-A1-102004 056 835
- DE-A1-102007 062 304
- DE-A1-102011 050 104

## Description

La présente invention concerne un connecteur mécanique pour un balai d'essuie-glace de véhicule, en particulier automobile, un balai d'essuie-glace comportant un tel connecteur, ainsi qu'un procédé de montage d'un balai d'essuie-glace.

Classiquement, un balai d'essuie-glace d'un véhicule automobile comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins une vertèbre longitudinale qui confère un cintrage à la lame, de manière à favoriser l'application de cette lame sur le pare-brise.

Le balai est porté par un bras qui est entraîné par un moteur dans un mouvement de va-et-vient angulaire. Le balai comporte un connecteur mécanique qui comprend des moyens de liaison au bras et en particulier à un adaptateur destiné à être solidaire du bras. Le connecteur comprend en outre des moyens de liaison à la vertèbre ou au corps de support de la lame d'essuyage.

Le connecteur est en général monté dans une découpe médiane du corps longitudinal qui est en général réalisé en deux parties ou pièces indépendantes, ces deux parties étant rendues solidaires l'une de l'autre par l'intermédiaire du connecteur qui est intercalé entre ces deux parties.

On a déjà proposé d'équiper un connecteur avec des moyens de distribution fluidique. Le connecteur peut par exemple comprendre une canule d'entrée de fluide raccordée par un tuyau souple à une pompe et à un réservoir de liquide lave-glace, et au moins une canule de sortie de fluide destinée à être emboîtée dans une extrémité d'un conduit de passage de fluide du corps en vue de son alimentation en liquide lave-glace. La canule de sortie du connecteur a un axe d'allongement parallèle à l'axe longitudinal du balai et est montée dans le conduit par translation dans une direction parallèle à l'axe longitudinal du balai.

Ce procédé de montage n'est toutefois pas toujours envisageable. C'est notamment le cas lorsque le corps est formé d'une seule pièce et non pas de deux pièces indépendantes. La découpe médiane du corps est alors une découpe partielle, qui ne s'étend pas sur toute la section transversale du corps et en particulier sur toute sa hauteur transversale. C'est notamment le cas lorsque le corps longitudinal comprend d'une part une partie supérieure formant un déflecteur aérodynamique et une partie inférieure formant un support pour la vertèbre et la lame d'essuyage. La découpe médiane n'est en général formée que dans la partie supérieure du corps longitudinal. Ce corps est en général formé par extrusion ou co-extrusion. DE-A-102007062304 montre le préambule de la revendication 1.

L'invention a notamment pour but de proposer une solution au problème précité, qui soit simple, efficace et économique.

L'invention propose ainsi un connecteur selon la revendication 1.

La présente invention autorise ainsi le montage d'un connecteur équipé de moyens de distribution fluidique dans une découpe médiane partielle d'un corps longitudinal du balai. Le connecteur est monté avant les canules de sortie, qui sont ensuite fixées sur le corps du connecteur.

Le connecteur selon l'invention peut comprendre une ou plusieurs des caractéristiques ci-dessous, prises isolément les unes des autres ou en combinaison les unes avec les autres :
- au moins deux canules de sortie sont rapportées et fixées sur ledit corps,
- au moins quatre canules de sortie sont rapportées et fixées sur ledit corps,
- la ou chaque canule de sortie comprend une extrémité configurée pour percer une partie du balai et pour raccorder la rampe à un conduit interne de cette partie,
- la ou chaque rampe est formée d'une seule pièce avec ses canules,
- les canules de la ou de chaque rampe sont sensiblement parallèles, et
- la ou chaque rampe comprend des moyens d'obturation d'un conduit de fluide, ces moyens d'obturation étant configurés pour prendre appui sur une paroi souple du conduit et pour déformer cette paroi jusqu'à obtenir l'obturation du conduit.

La présente invention concerne encore un balai d'essuie-glace d'un véhicule, en particulier automobile, comprenant un connecteur mécanique tel que décrit ci-dessus, le balai étant de préférence monté dans une découpe médiane d'un organe longitudinal formé d'une seule pièce.

La présente invention concerne également un procédé de montage d'un balai d'essuie-glace d'un véhicule, en particulier automobile, selon la revendication 8.

L'organe longitudinal étant formé d'une seule pièce, le corps du connecteur peut être monté dans la découpe médiane à l'étape a) par translation dans une direction sensiblement perpendiculaire à l'axe longitudinal de cet organe.

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective éclatée d'un balai d'essuie-glace selon l'art antérieur,
- la figure 2 est une vue schématique en perspective d'un balai d'essuie-glace selon l'invention,
- la figure 3 est une vue schématique en perspective d'un corps longitudinal du balai de la figure 2,
- la figure 4 est une vue schématique en coupe transversale du corps longitudinal de la figure 3,
- la figure 5 est une vue schématique en perspective d'un corps de connecteur selon un mode de réalisation non revendiqué,
- la figure 6 est une vue schématique en perspective de canules de sortie de fluide selon un mode de réalisation non revendiqué,
- les figures 7 à 10 sont des vues schématiques partielles en perspective du balai de la figure 2 et représentent des étapes de montage de ce balai,
- la figure 11 est une vue schématique partielle en perspective d'un balai d'essuie-glace selon l'invention,
- la figure 12 est une autre vue schématique partielle en perspective du balai de la figure 11 et représente une étape de montage de ce balai, et
- la figure 13 est une vue schématique en coupe longitudinale du balai de la figure 11.

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur le bras d'entraînement, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

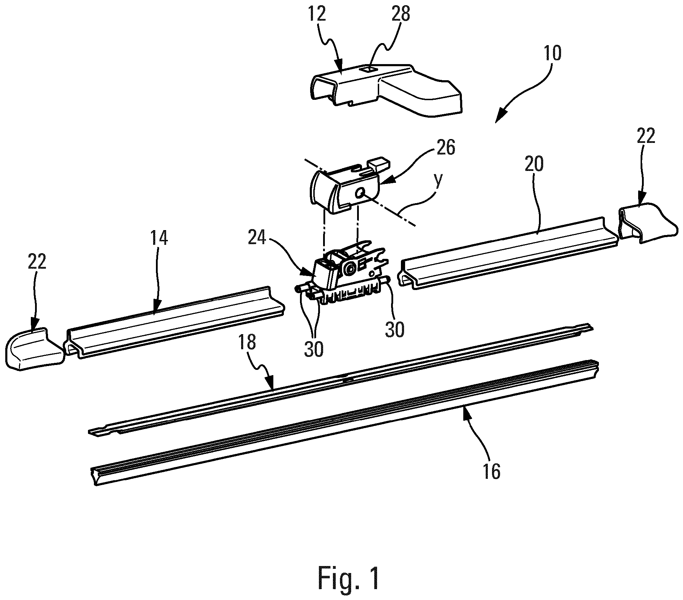

Il est illustré à la figure 1 un système selon l'art antérieur d'essuyage de pare-brise d'un véhicule, en particulier automobile. Ce système comprend un balai d'essuie-glace 10 et un bras 12 d'entraînement du balai, qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame longitudinale 16 d'essuyage, en général en caoutchouc, et au moins une vertèbre longitudinale 18 qui confère un cintrage à la lame 16 de manière à favoriser l'application de cette lame sur le pare-brise.

Le corps 14 du balai 10 comporte un déflecteur aérodynamique supérieur 20 destiné à améliorer le fonctionnement du balai, le but de ce déflecteur 20 étant d'améliorer le plaquage du balai sur le pare-brise et donc la performance du système.

Le balai 10 comprend en outre des embouts ou agrafes d'accrochage 22 de la lame 16 et de la vertèbre 18 sur le corps, ces agrafes 22 étant situées à chacune des extrémités longitudinales du corps 14.

Le corps 14 du balai est ici réalisé en deux parties indépendantes qui sont disposées sensiblement bout à bout et raccordées l'une à l'autre au niveau d'un connecteur mécanique 24 intermédiaire. Le connecteur 24 est ainsi intercalé entre les deux demi-corps.

Pour assurer son montage sur le bras 12, le balai 10 comprend un adaptateur 26 qui est monté sur le connecteur 24 et qui permet une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

Le connecteur 24 est ici équipé de moyens de distribution fluidique qui sont raccordés par un tuyau souple (non représenté) à une pompe et à un réservoir de liquide lave-glace montés dans le véhicule, et qui comprennent notamment des canules 30 de sortie de fluide.

Les canules 30 sont en saillie sur le connecteur et sont formées d'une seule pièce avec lui. Elles ont une forme générale cylindrique et s'étendent parallèlement à l'axe longitudinal du balai. Elles comportent chacune une extrémité engagée dans une extrémité d'un conduit (non représenté) de passage de fluide du corps 14 qui comprend des orifices de pulvérisation du liquide lave-glace sur le pare-brise. Les canules 30 sont donc engagées dans ces conduits par translation de chaque demi-corps 14 vers le connecteur 24, dans des directions parallèles à l'axe longitudinal du balai. Ce procédé de montage n'est toutefois pas envisageable lorsque le corps longitudinal 14 du balai est formé d'une seule pièce, c'est-à-dire que les parties du corps s'étendant de part et d'autre du connecteur 24 sont reliées ensemble pour former une seule pièce, cette pièce comportant une découpe médiane de logement du connecteur.

La présente invention permet de résoudre ce problème grâce à un connecteur comportant d'une part un corps et d'autre par des canules de sortie de fluide qui sont configurées pour être rapportées et fixées sur le corps.

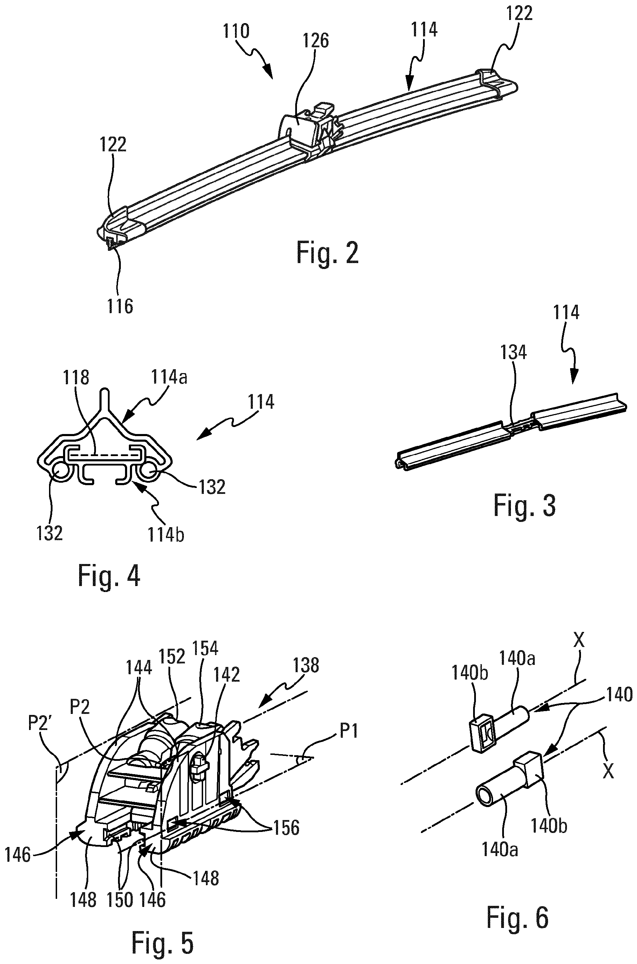

On se réfère maintenant aux figures 2 à 10 qui représentent un premier mode de réalisation non revendiqué dans lequel les éléments déjà décrits dans ce qui précède sont référencés par les mêmes chiffres augmentés d'une centaine.

Le balai 110 comprend ici un corps longitudinal 114 formé d'une seule pièce, qui est représenté seul aux figures 3 et 4.

Le corps 114 comprend essentiellement deux parties, une partie longitudinale supérieure 114a définissant un déflecteur aérodynamique 120, et une partie longitudinale inférieure 114b comportant un logement longitudinal supérieur de réception d'au moins une vertèbre longitudinale 118 de rigidification et un logement longitudinal inférieur de réception d'une lame longitudinale 116 d'essuyage, et plus exactement d'un talon longitudinal supérieur de cette lame 116.

La partie supérieure 114a du corps 114 comprend des flancs latéraux longitudinaux qui s'étendent de part et d'autre de la partie inférieure 114b et qui comportent chacun un conduit longitudinal interne 132 de passage de fluide, et en particulier de liquide lave-glace.

Le corps 114 peut être réalisé par extrusion ou par co-extrusion, dans le cas par exemple où ses parties 114a, 114b sont réalisées dans des matériaux différents.

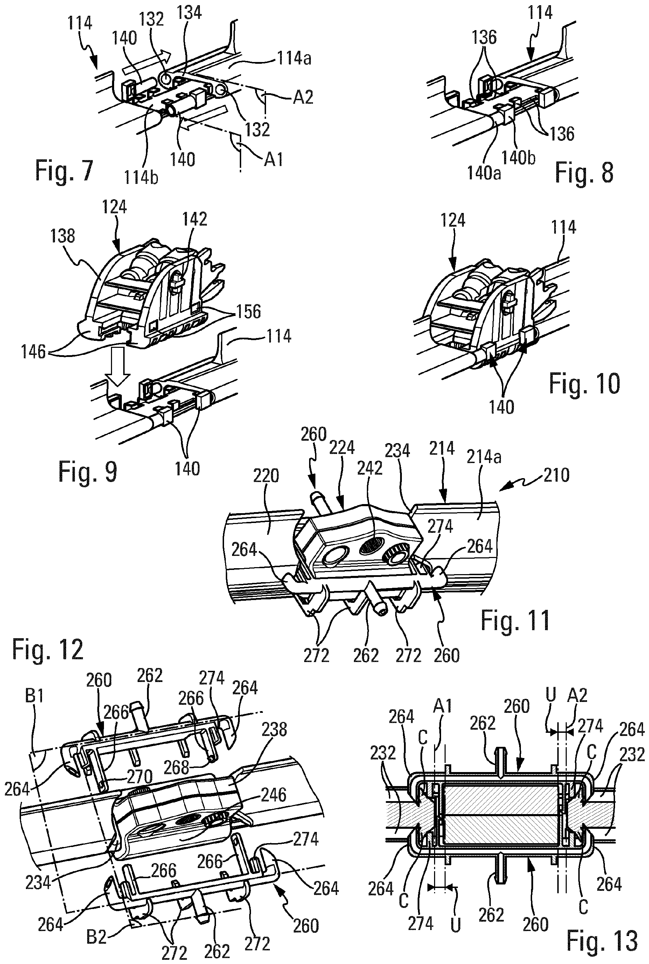

Comme cela est visible en figure 3, le corps 114 comprend une découpe médiane 134 partielle configurée pour recevoir un connecteur 124 selon l'invention. Dans l'exemple représenté, la découpe 134 est réalisée sur l'intégralité de la partie supérieure 114a du corps, sa partie inférieure 114b n'étant pas découpée mais comportant seulement des encoches transversales 136 au niveau de la découpe 134, comme cela est visible à la figure 9. La découpe 134 s'étend entre deux plans de coupe A1, A2 parallèles entre eux et perpendiculaires à l'axe longitudinal du balai. La découpe 134 s'étend entre deux parties longitudinales du corps 114, appelées demi-corps, qui sont reliées ensemble par une portion médiane de la partie inférieure 114b.

Les embouts 122 et l'adaptateur 126 du balai 110 sont similaires à ceux de la figure 1.

Le connecteur 124 selon l'invention comprend d'une part un corps 138 représenté en figure 5 et des canules de sortie 140 dont deux sont représentées en figure 6, les canules 140 étant destinées à être fixées, par exemple par soudage par ultrason, sur le corps 138 du connecteur 124.

Le corps 138 du connecteur 124 comprend classiquement des premiers moyens 142 de liaison à un bras d'entraînement du balai, et plus précisément à l'adaptateur 126 solidaire du bras. Ces premiers moyens de liaison 142 comportent ici des tourillons latéraux en saillie sur des parois latérales 144 du corps. Ces parois latérales 144 sont sensiblement parallèles entre elles et à l'axe longitudinal du balai et comprennent des faces latérales internes en regard et des faces latérales externes sur lesquelles sont prévus les tourillons précités.

En variante, les premiers moyens de liaison 142 pourraient être formés par un axe rapporté dans des orifices traversants et alignés des parois latérales 144 du corps. Cet axe aurait alors une longueur supérieure à la distance entre les faces externes des parois 144 de façon à ce que les parties d'extrémité de l'axe soient en saillie sur ces faces pour venir coopérer avec l'adaptateur 126.

Le corps 138 du connecteur 124 comprend en outre des seconds moyens 146 de liaison au corps 114 et à la vertèbre 118. Ces moyens 146 comprennent ici des pattes latérales inférieures 148 qui sont configurées pour s'étendre dans les encoches 136 précitées de la partie inférieure 114b du corps et qui comportent des rainures longitudinales 150 de réception de la vertèbre 118. Ces rainures 150 sont destinées à être alignées avec le logement supérieur de la partie inférieure 114b du corps, dans lequel est montée la vertèbre 118.

Les parois 144 du corps 138 du connecteur définissent entre elles un espace dans lequel sont situés d'une part des moyens 152 de raccordement électrique à un connecteur électrique (non représenté) et des moyens 154 de raccordement fluidique à un connecteur fluidique (non représenté). Les moyens de distribution fluidique du corps 138 du connecteur comprennent d'une part ces moyens de raccordement 154 et d'autre part des canaux internes (non visibles) de circulation de fluide qui débouchent ici sur les faces latérales externes des parois 144. La face externe de chaque paroi 144 comprend ici deux ouvertures ou débouchés 156 de tels canaux qui sont ici situés sur une partie inférieure du corps et à distance l'un de l'autre, un premier débouché 156 étant situé au voisinage d'une extrémité longitudinale du corps 138 et l'autre débouché 156 étant située au voisinage de l'extrémité longitudinale opposée du corps. Chaque débouché 156 a une forme générale carrée ou rectangulaire. On note P1 un plan longitudinal sensiblement horizontal passant par les débouchés 156 et P2, P2' les plans des faces externes des parois 144 sur lesquelles sont situées ces débouchés 156.

Chaque débouché 156 est destiné à être associé à une canule de sortie 140, les canules 140 étant donc au nombre de quatre bien que seulement deux soient représentées en figure 6. Chaque canule 140 comprend une partie d'emboîtement mâle 140a et une tête de raccordement 140b.

La partie 140a de chaque canule 140 a une forme générale cylindrique et tubulaire d'axe d'allongement X. Une extrémité de cette partie 140a est reliée à la tête de raccordement 140b qui est formée par un petit couvercle creux dont l'espace interne est reliée à l'espace interne de la partie 140a et débouche en outre sur un côté de la canule 140. L'extrémité de la partie 140a, opposée à la tête 140b, est configurée pour être engagée (de préférence en force pour une liaison étanche) dans une extrémité d'un conduit 132 d'un demi-corps 114, comme cela est représenté aux figures 7 et 8. Les canules 140 sont montées dans ces conduits par translation dans des directions parallèles à l'axe longitudinal du balai.

Les figures 7 à 10 représentent des étapes d'un procédé de montage du balai 110. Les canules 140 sont montées sur le corps 114 par engagement de leurs parties 140a dans les extrémités des conduits 132 qui débouchent dans la découpe 134 du corps 114 (figures 7 et 8). Le corps 138 du connecteur 124 est ensuite monté dans la découpe 134 et entre les canules 140 (figures 9 et 10), par translation dans une direction sensiblement perpendiculaire à l'axe longitudinal du balai (ici dans une direction verticale du haut vers le bas), jusqu'à ce que les pattes 148 du corps 138 soient disposées de chaque côté de la partie inférieure 114b du corps 114 et que les débouchés 156 soient recouverts par les têtes de raccordement 140b des canules 140 (figure 10). Les rainures 150 sont alors alignées avec le logement supérieur de la partie 114b du corps 114 et peuvent recevoir la vertèbre 118 pour bloquer le connecteur vis-à-vis du corps. Les têtes 140b des canules 140 sont alors fixées, de préférence par soudage par ultrason, sur les parois 144 de façon à solidariser les canules de sortie 140 au corps 138 et à former le connecteur 124 selon l'invention. Le cordon de soudure s'étend de préférence sur tout le pourtour de la tête de raccordement 140b, dans le plan P2 ou P2', de façon à réaliser une liaison étanche de la canule 140 au corps 138 du connecteur 124.

On se réfère désormais aux figures 11 à 13 qui représentent l'invention dans lequel les éléments déjà décrits dans ce qui précède, en référence aux figures 2 à 10, sont référencés par les mêmes chiffres augmentés d'une centaine.

Le balai 210 comprend ici un corps longitudinal 214 formé d'une seule pièce. Le corps 214 comprend essentiellement deux parties, une partie longitudinale supérieure 214a définissant un déflecteur aérodynamique 220, et une partie longitudinale inférieure de support d'une lame d'essuyage et d'une vertèbre, comme décrit dans ce qui précède.

La partie supérieure 214a du corps comprend des flancs latéraux longitudinaux qui comportent chacun un conduit longitudinal interne 232 de passage de fluide, et en particulier de liquide lave-glace.

Le corps 214 comprend une découpe médiane 234 partielle configurée pour recevoir un connecteur 224 selon l'invention. Les conduits 232 des demi-corps sont obturés (en C, au niveau de la découpe médiane 234) par déformation des extrémités correspondantes des conduits, comme cela sera décrit plus en détail dans ce qui suit.

Dans l'exemple représenté, la découpe 234 s'étend entre deux plans de coupe A1, A2 parallèles et perpendiculaires à l'axe longitudinal du balai et entraîne une ouverture de chaque conduit 232 au niveau de cette découpe.

Les plans de coupe A1, A2 sont espacés d'une distance supérieure à la dimension longitudinale du corps 238 du connecteur de façon à ce qu'un jeu axial U persiste après montage de ce corps dans la découpe 234, entre le corps 238 et chaque demi-corps 214.

Le connecteur 224 selon l'invention comprend d'une part le corps 238 et deux rampes longitudinales 260 de distribution fluidique qui sont destinées à être fixées, par exemple par soudage par ultrason ou assemblage mécanique, sur le corps. Le corps 238 du connecteur est lui-même dépourvu de moyens de distribution fluidique.

Le corps 238 du connecteur 224 comprend classiquement des premiers moyens 242 de liaison à un bras d'entraînement du balai, et plus précisément à l'adaptateur solidaire du bras. Ces premiers moyens de liaison 242 comportant ici un logement cylindrique de réception d'un axe de pivotement du balai vis-à-vis du bras.

Le corps 238 du connecteur 224 comprend en outre des seconds moyens 246 de liaison au corps 214 et à la vertèbre, qui sont similaires à ceux décrits dans ce qui précède.

Chaque rampe 260 comprend une portion longitudinale rectiligne qui s'étend le long d'un côté du connecteur et trois canules 262, 264 : une canule d'entrée 262 et deux canules de sortie 264. La canule d'entrée 262 est raccordée sensiblement au milieu de la rampe 260 et s'étend sensiblement perpendiculairement à cette rampe du côté opposé au corps 238. Chaque extrémité longitudinale de la rampe 260 est raccordée à une canule de sortie 264 qui s'étend sensiblement perpendiculairement à cette rampe 260 du côté du corps 238. Comme cela est visible dans les dessins, les canules 262, 264 sont sensiblement parallèles entre elles et perpendiculaires à l'axe longitudinal du balai.

L'extrémité libre de la canule d'entrée 262 est configurée pour être engagée dans une extrémité d'un tuyau souple (non représenté) d'alimentation en liquide lave-glace du balai. L'extrémité libre de chaque canule de sortie 264 est affutée de façon à pouvoir percer le matériau du corps 214 et à pénétrer en force dans ce corps pour raccorder la rampe 260 au conduit interne 232 et ainsi assurer l'étanchéité entre la canule 264 et le corps 214, comme cela est visible en figure 13.

Chaque rampe 260 comprend en outre des moyens de fixation qui comportent ici des premières pattes transversales 266 qui s'étendent parallèlement aux canules de sortie 264, du côté du corps 238, et qui comportent à leurs extrémités libres des moyens d'encliquetage élastique destinés à coopérer avec des moyens complémentaires des extrémités libres des pattes 266 de l'autre rampe 260. Les pattes 266 de chaque rampe 260 sont ici au nombre de deux. Dans l'exemple représenté, parmi ces deux rampes 260, une première comprend à son extrémité libre un ergot 268 en saillie destiné à coopérer par encliquetage élastique avec un orifice 270 d'une patte de l'autre rampe, et une seconde comprend à son extrémité libre un orifice 270 destiné à coopérer par encliquetage élastique avec un ergot 268 d'une patte de l'autre rampe. Les pattes 266 sont élastiquement déformables pour faciliter cet encliquetage. Elles sont destinées à être engagées dans ledit jeu U.

Les moyens de fixation des rampes 260 comportent en outre des jambes 272 en saillie qui s'étendent parallèlement aux canules de sortie, du côté du connecteur, et qui sont configurées pour s'étendre sous le connecteur. Les jambes 272 servent à bloquer verticalement les canules 264 sur le connecteur 224, en complément de l'assemblage des pattes 266 (« par prise en sandwich »).

On note B1 le plan longitudinal sensiblement horizontal passant par les canules et les pattes (qui est le plan de coupe de la figure 13), et B2 le plan longitudinal sensiblement horizontal passant par les jambes 272. B2 est à distance de B1 et situé sous B1.

Chaque rampe 260 comprend en outre deux doigts 274 qui s'étendent parallèlement aux canules de sortie 264, du côté du corps 238, et dont les extrémités libres sont destinées à venir en appui contre les extrémités adjacentes des conduits 232 des demi-corps afin de déformer et d'écraser la matière souple des conduits jusqu'à obtention de leur obturation (en C).

Les doigts 274 sont situés dans le plan B2. Chaque doigt 274 est situé au voisinage d'une canule de sortie 264, entre cette canule 264 et la patte 266 la plus proche.

La figure 12 représente une étape d'un procédé de montage du balai 210. Le corps 238 du connecteur 224 est d'abord monté dans la découpe médiane 234 du corps 214 du balai, par translation dans une direction sensiblement perpendiculaire à l'axe longitudinal du balai (ici verticalement du haut vers le bas). Les rampes 260 sont ensuite disposées de chaque côté du corps, comme représenté en figure 12, puis elles sont déplacées en translation vers le corps 214 dans des directions perpendiculaires à l'axe longitudinal du balai (ici horizontalement), jusqu'à ce que les canules de sortie 264 percent le corps 214 et raccordent la rampe 260 aux conduits 232 (figure 10). Les canules 264 doivent être engagées suffisamment dans le corps 214 pour autoriser la coopération des pattes 266 de fixation des rampes. Il suffit donc de réaliser l'encliquetage élastique des pattes 266, dans le jeu U, pour s'assurer que les canules de sortie 264 sont suffisamment engagées dans le corps 214. En parallèle, les doigts 274 viennent obturer les conduits 232, pour assurer l'étanchéité hydraulique du circuit. La rampe 160 est alors fixée, de préférence par soudage par ultrason, sur le corps 238 du connecteur 224 de façon à solidariser les canules de sortie au corps 238 et à former le connecteur selon l'invention, voire également sur le corps 214 du balai.

## Revendications

1. Connecteur (224) pour un balai d'essuie-glace (210) de véhicule, en particulier automobile, le connecteur comportant un corps (238) comprenant des premiers moyens (242) de liaison à un bras d'entraînement dudit balai et des seconds moyens (246) de liaison à un organe longitudinal (214) du balai, le corps du connecteur comprenant des parois latérales (144) sensiblement parallèles entre elles et à un axe longitudinal du balai, le connecteur comportant en outre des moyens de distribution fluidique comprenant des canules de sortie de fluide, lesdites canules (264) de sortie de fluide étant rapportées et fixées sur ledit corps, les moyens de distributions fluidique s'étendant au moins en partie le long d'une face latérale externe d'une paroi latérale, sur un côté du connecteur, lesdits moyens de distribution étant intégralement rapportés et fixés sur ledit corps, les moyens de distribution comprenant au moins une rampe de distribution (260) comportant une canule (262) d'entrée de fluide et au moins une canule (264) de sortie de fluide, les moyens de distribution comprenant deux rampes de distribution (260) qui s'étendent respectivement le long de deux côtés opposés dudit corps (238), **caractérisé en ce que** l'une des rampes comporte des moyens de fixation (266) coopérant, par exemple par encliquetage élastique, avec des moyens de fixation de l'autre rampe.

2. Connecteur (224) selon la revendication 1, dans lequel au moins deux et de préférence quatre canules de sortie (264) sont rapportées et fixées sur ledit corps (238).

3. Connecteur (224) selon l'une des revendications précédentes, dans lequel la ou chaque canule de sortie (264) comprend une extrémité configurée pour percer une partie (214) du balai et pour raccorder la rampe (260) à un conduit interne (232) de cette partie.

4. Connecteur (224) selon l'une des revendications précédentes, dans lequel la ou chaque rampe (260) est formée d'une seule pièce avec ses canules (262, 264).

5. Connecteur (224) selon l'une des revendications précédentes, dans lequel les canules (262, 264) de la ou de chaque rampe (260) sont sensiblement parallèles.

6. Connecteur (224) selon l'une des revendications précédentes, dans lequel la ou chaque rampe (260) comprend des moyens (274) d'obturation d'un conduit (232) de fluide, ces moyens d'obturation étant configurés pour prendre appui sur une paroi souple du conduit et pour déformer cette paroi jusqu'à obtenir l'obturation du conduit.

7. Balai d'essuie-glace (210) d'un véhicule, en particulier automobile, comprenant un connecteur mécanique (224) selon l'une des revendications précédentes, le balai étant de préférence monté dans une découpe médiane (234) d'un organe longitudinal (214) formé d'une seule pièce.

8. Procédé de montage d'un balai d'essuie-glace (210) d'un véhicule, en particulier automobile, **caractérisé en ce qu'**il comprend les étapes consistant :
a) à monter un corps (238) d'un connecteur mécanique (224) selon la revendication 1 dans une découpe médiane (234) d'un organe longitudinal (214) du balai, puis à rapporter des canules de sortie (264) de moyens de distribution fluidique sur le corps,
b) et à fixer les canules (264) au corps, le long d'une face latérale externe d'une paroi latérale du corps (238), par exemple par soudage par ultrason, pour former le connecteur selon la revendication 1.

9. Procédé selon la revendication 8, dans lequel, l'organe longitudinal (214) étant formé d'une seule pièce, le corps (238) du connecteur (224) est monté dans la découpe médiane (238) à l'étape a) par translation dans une direction sensiblement perpendiculaire à l'axe longitudinal de cet organe.

## Patentansprüche

1. Verbinder (224) für ein Scheibenwischerblatt (210) eines Fahrzeugs, insbesondere eines Kraftfahrzeugs, wobei der Verbinder einen Körper (238) aufweist, der erste Mittel (242) zur Verbindung mit einem Antriebsarm des Wischerblattes und zweite Mittel (246) zur Verbindung mit einem Längsorgan (214) des Wischerblattes umfasst, wobei der Körper des Verbinders Seitenwände (144), die im Wesentlichen zueinander und zu einer Längsachse des Wischerblattes parallel sind, umfasst, wobei der Verbinder außerdem Fluidverteilungsmittel aufweist, welche Fluidaustrittsröhrchen umfassen, wobei die Fluidaustrittsröhrchen (264) an den Körper angesetzt und an ihm befestigt sind, wobei sich die Fluidverteilungsmittel wenigstens teilweise entlang einer äußeren seitlichen Fläche einer Seitenwand erstrecken, auf einer Seite des Verbinders, wobei die Verteilungsmittel vollständig an den Körper angesetzt und an ihm befestigt sind, wobei die Verteilungsmittel wenigstens ein Verteilerrohr (260) umfassen, das ein Fluideintrittsröhrchen (262) und wenigstens ein Fluidaustrittsröhrchen (264) aufweist, wobei die Verteilungsmittel zwei Verteilerrohre (260) umfassen, welche sich entlang jeweils einer von zwei gegenüberliegenden Seiten des Körpers (238) erstrecken, **dadurch gekennzeichnet, dass** eines der Rohre Befestigungsmittel (266) aufweist, die, zum Beispiel durch elastisches Einrasten, mit Befestigungsmitteln des anderen Rohres zusammenwirken.

2. Verbinder (224) nach Anspruch 1, wobei wenigstens zwei und vorzugsweise vier Austrittsröhrchen (264) an den Körper (238) angesetzt und an ihm befestigt sind.

3. Verbinder (224) nach einem der vorhergehenden Ansprüche, wobei das oder jedes Austrittsröhrchen (264) ein Ende umfasst, das dafür ausgelegt ist, einen Teil (214) des Wischerblattes zu durchbohren und das Rohr (260) an eine innere Leitung (232) dieses Teils anzuschließen.

4. Verbinder (224) nach einem der vorhergehenden Ansprüche, wobei das oder jedes Rohr (260) mit seinen Röhrchen (262, 264) aus einem Stück ausgebildet ist.

5. Verbinder (224) nach einem der vorhergehenden Ansprüche, wobei die Röhrchen (262, 264) des oder jedes Rohres (260) im Wesentlichen parallel sind.

6. Verbinder (224) nach einem der vorhergehenden Ansprüche, wobei das oder jedes Rohr (260) Mittel (274) zum Verschließen einer Fluidleitung (232) umfasst, wobei diese Mittel zum Verschließen dafür ausgelegt sind, sich an einer flexiblen Wand der Leitung abzustützen und diese Wand zu verformen, bis das Verschließen der Leitung erreicht wird.

7. Scheibenwischerblatt (210) eines Fahrzeugs, insbesondere eines Kraftfahrzeugs, welches einen mechanischen Verbinder (224) nach einem der vorhergehenden Ansprüche umfasst, wobei das Wischerblatt vorzugsweise in einem mittigen Ausschnitt (234) eines Längsorgans (214), das aus einem Stück ausgebildet ist, angebracht ist.

8. Verfahren zur Montage eines Scheibenwischerblattes (210) eines Fahrzeugs, insbesondere eines Kraftfahrzeugs, **dadurch gekennzeichnet, dass** es die Schritte umfasst, die darin bestehen:
a) einen Körper (238) eines mechanischen Verbinders (224) nach Anspruch 1 in einem mittigen Ausschnitt (234) eines Längsorgans (214) des Wischerblattes anzubringen und anschließend Austrittsröhrchen (264) von Fluidverteilungsmitteln an den Körper anzusetzen,
b) und die Röhrchen (264) am Körper entlang einer äußeren seitlichen Fläche einer Seitenwand des Körpers (238) zu befestigen, zum Beispiel durch Ultraschallschweißen, um den Verbinder nach Anspruch 1 auszubilden.

9. Verfahren nach Anspruch 8, wobei, wenn das Längsorgan (214) aus einem Stück ausgebildet ist, der Körper (238) des Verbinders (224) in Schritt a) in dem mittigen Ausschnitt (238) durch Translation in einer Richtung angebracht wird, die im Wesentlichen senkrecht zur Längsachse dieses Organs ist.

## Claims

1. Connector (224) for a windshield wiper blade (210) of a vehicle, in particular a motor vehicle, the connector comprising a body (238) comprising first means (242) for linking to a drive arm of said blade and second means (246) for linking to a longitudinal member (214) of the blade, the body of the connector comprising lateral walls (144) that are substantially parallel to one another and to a longitudinal axis of the blade, the connector also comprising fluid dispensing means comprising fluid outlet nozzles, said fluid outlet nozzles (264) being added and fixed onto said body, the fluid dispensing means extending at least partly along an outer lateral face of a lateral wall, on one side of the connector, said dispensing means being fully added and fixed onto said body, the dispensing means comprising at least one dispensing boom (260) comprising a fluid inlet nozzle (262) and at least one fluid outlet nozzle (264), the dispensing means comprising two dispensing booms (260) which extend respectively along two opposite sides of said body (238), **characterized in that** one of the booms comprises fixing means (266) cooperating, for example by elastic snap-fitting, with fixing means of the other boom.

2. Connector (224) according to Claim 1, wherein at least two and preferably four outlet nozzles (264) are added and fixed onto said body (238).

3. Connector (224) according to one of the preceding claims, wherein the or each outlet nozzle (264) comprises an end configured to pierce a part (214) of the blade and to connect the boom (260) to an internal duct (232) of this part.

4. Connector (224) according to one of the preceding claims, wherein the or each boom (260) is formed in a single piece with its nozzles (262, 264).

5. Connector (224) according to one of the preceding claims, wherein the nozzles (262, 264) of the or each boom (260) are substantially parallel.

6. Connector (224) according to one of the preceding claims, wherein the or each boom (260) comprises means (274) for blocking a fluid duct (232), these blocking means being configured to bear on a flexible wall of the duct and to deform this wall to obtain the blocking of the duct.

7. Windshield wiper blade (210) of a vehicle, in particular a motor vehicle, comprising a mechanical connector (224) according to one of the preceding claims, the blade being preferably mounted in a medium cutout (234) of a longitudinal member (214) formed in a single piece.

8. Method for mounting a windshield wiper blade (210) of a vehicle, in particular a motor vehicle, **characterized in that** it comprises the steps of:
a) mounting a body (238) of a mechanical connector (224) according to Claim 1 in a median cutout (234) of a longitudinal member (214) of the blade, then adding outlet nozzles (264) of fluid dispensing means onto the body,
b) and fixing the nozzles (264) to the body, along an outer lateral face of a lateral wall of the body (238), for example by ultrasound welding, to form the connector according to Claim 1.

9. Method according to Claim 8, wherein, the longitudinal member (214) being formed in a single piece, the body (238) of the connector (224) is mounted in the medium cutout (238) in the step a) by translation in a direction substantially at right angles to the longitudinal axis of this member.
